# EUROPEAN PATENT SPECIFICATION

(11) **EP 3 822 855 B1**
(45) Date of publication and mention of the grant of the patent: **24.07.2024**
(21) Application number: 20217297.9
(22) Date of filing: 03.09.2015
(51) Int. Cl.: G06V 10/24, B66C 13/46, B66C 23/52, E02B 17/00, E02B 17/02, G06T 7/73

(54) **SPATIAL POSITIONING OF OFFSHORE STRUCTURES**
RÄUMLICHE POSITIONIERUNG VON OFFSHORE-STRUKTUREN
POSITIONNEMENT SPATIAL DE STRUCTURES EN HAUTE MER

(30) Priority: 03.09.2014 NL 2013409
(43) Date of publication of application: 19.05.2021
(62) Divisional of application: 15183617.8
(73) Proprietor: FNV IP B.V., 2264 SG Leidschendam (NL)
(72) Inventor: Booij, Olaf, 2315 HL Leiden (NL); Schippers, Evert, 2451 ZC Leimuiden (NL); Wouters, Hendrik, 2593 TD Den Haag (NL); Nejadasl, Fatemeh Karimi, 2611 KD Delft (NL); Dias Bispo Carvalho, Diego, 3026 GC Rotterdam (NL)
(74) Representative: Burnaby Lautier, Reynier Jacques

(56) References cited:
- BENETAZZO A ED - DEMIRBILEK ZEKI: "Accurate measurement of six Degree Of Freedom small-scale ship motion through analysis of one camera images", OCEAN ENGINEERING, PERGAMON, AMSTERDAM, NL, vol. 38, no. 16, 21 August 2011 (2011-08-21), pages 1755 - 1762, XP028322423, ISSN: 0029-8018, [retrieved on 20110826], DOI: 10.1016/J.OCEANENG.2011.08.006
- "Advances in Sustainable and Competitive Manufacturing Systems", 1 January 2013, SPRINGER INTERNATIONAL PUBLISHING, Heidelberg, ISBN: 978-3-31-900557-7, ISSN: 2195-4356, article PAULO MALHEIROS ET AL: "Real-Time Tracking System for a Moored Oil Tanker: A Kalman Filter Approach", pages: 749 - 760, XP055171839, DOI: 10.1007/978-3-319-00557-7_62
- XIN LI ET AL: "Research on Motion Response of Soft Yoke Mooring FPSO System", PROCEEDINGS OF THE SIXTEENTH (2006) INTERNATIONAL OFFSHORE AND POLAR ENGINEERING CONFERENCE, 28 May 2006 (2006-05-28), XP055168516, Retrieved from the Internet <URL:https://www.onepetro.org/download/conference-paper/ISOPE-I-06-063?id=conference-paper/ISOPE-I-06-063> [retrieved on 20150209]
- RHINEFRANK K ET AL: "Scaled wave energy device performance evaluation through high resolution wave tank testing", OCEANS 2010, IEEE, PISCATAWAY, NJ, USA, 20 September 2010 (2010-09-20), pages 1 - 6, XP031832300, ISBN: 978-1-4244-4332-1
- VICKY WONG ET AL: "A combined particle filter and deterministic approach for underwater object localization using markers", OCEANS 2010, IEEE, PISCATAWAY, NJ, USA, 20 September 2010 (2010-09-20), pages 1 - 10, XP031832317, ISBN: 978-1-4244-4332-1
- ROBERTO RAFFAELI ET AL: "Virtual planning for autonomous inspection of electromechanical products", INTERNATIONAL JOURNAL ON INTERACTIVE DESIGN AND MANUFACTURING (IJIDEM), SPRINGER-VERLAG, PARIS, vol. 6, no. 4, 31 March 2012 (2012-03-31), pages 215 - 231, XP035132757, ISSN: 1955-2505, DOI: 10.1007/S12008-012-0151-2
- BENJAMIN L TRUSKIN ET AL: "Vision-based Deck State Estimation for Autonomous Ship-board Landing", 21 May 2013 (2013-05-21), XP055696146, Retrieved from the Internet <URL:http://citeseerx.ist.psu.edu/viewdoc/download?doi=10.1.1.726.5264&rep=rep1&type=pdf> [retrieved on 20200515]
- BENJAMIN TRUSKIN: "VISION-BASED DECK STATE ESTIMATION FOR AUTONOMOUS SHIP-BOARD LANDING", 1 May 2013 (2013-05-01), XP055738019, Retrieved from the Internet <URL:https://etda.libraries.psu.edu/files/final_submissions/8514> [retrieved on 20201008]

## Description

### TECHNICAL FIELD

The present invention relates to systems for determining the position of an object in 3D space and more particularly to such a system that can be used for the spatial positioning of offshore structures. The invention also relates to methods of positioning of objects and structures from a moving reference frame. The present document is a divisional from EP 15183617.

### BACKGROUND ART

In various situations, a need may exist for determining the position of an object in 3D space. This requires the position of the object to be determined with six degrees of freedom, namely x-y-z co-ordinates and pitch-roll-yaw angular positions. The position may be determined in a local reference frame or in the Earth's reference frame, depending on the requirements of the situation. In the following, reference will be made to positioning within the Earth's geodetic reference frame unless otherwise stated, although the invention is equally applicable to any chosen reference frame.

Existing positioning systems are employed in robotic processes, space technology, surveying and the like. One system disclosed in US8798794 enables precise robotic positioning of an object having optically detectable features by means of a 3D image recording device. Benjamin Truskin: "VISION-BASED DECK STATE ESTIMATION FOR AUTONOMOUS SHIP-BOARD LANDING", 1 May 2013 (2013-05-01), XP055738019, discloses a system configured for automatically landing of a helicopter on a landing site of a ship.

In the offshore construction industries, positioning can be problematic for various reasons. In particular, surveying from a moving vessel means that a fixed datum level is not available. Determining the Z (vertical) co-ordinate is difficult due to tides, vessel ballast and waves, and the rolling or pitching motion of a vessel can lead to large angular movements. Furthermore, since the offshore location may be remote, satellite positioning may be less accurate or reliable than at onshore locations.

One situation where accurate positioning of structures is required is during the installation of offshore platforms. Such platforms generally comprise a jacket and a topside supported by the jacket. Topsides range from simple small decks for supporting personnel and equipment to complete multi-storey oil and gas platforms. Before the jacket is secured to the sea floor, it must be positioned at the desired site. A j acket's desired installation position and heading is pre-determined prior to placement by a range of factors. Prevailing wind or water current direction may dictate a best heading to minimise structural loading. Likewise, a jacket location may be dictated by the requirement to drill into pre-determined subsea reserves or the need to connect a jacket to existing surface or subsea infrastructure.

Currently, methods for jacket placement rely on a pod of instruments installed on top of the jacket, including one or more Global Navigation Satellite System (GNSS) receivers, a gyrocompass, an inertial monitoring unit (IMU) and associated telemetry equipment. This technique generally requires access to the jacket by personnel in a man basket to install or remove the instruments. In addition, the jacket must often be equipped with additional temporary gangways for the safe movement of personnel for equipment installation or removal. This procedure typically requires at least two surveyors. These current techniques are costly, and subject personnel to increased risk of injury. After installation, much of this equipment must be removed, requiring still further operations.

Conventional surveying techniques used during placement of onshore engineering structures may use theodolites and laser ranging instruments. Such instruments and techniques are however not adapted for use offshore where the dynamic nature of the situation makes accurate readings difficult or impossible.

It would be desirable to provide an improved system and method for structure positioning from a moving reference frame that at least partially alleviates some of these disadvantages.

### SUMMARY OF INVENTION

The invention is defined in the independent claims, whereas advantageous embodiments are defined in dependent claims. The remainder of the section "summary of the invention" comprises background information.

In the present document, there is explained a system for determining the position of an offshore structure in a fixed reference frame by observations from a moving reference frame, the system comprising a plurality of markers located at defined positions on the structure; an imaging device, arranged to view the markers and generate image data representative of the relative positions of the markers in the moving reference frame; a local positioning system, arranged to determine the position of the imaging device in the fixed reference frame and generate position data; a processing unit, arranged to receive the image data from the imaging device and the position data from the inertial positioning system and compute the position of the structure based on the defined positions of the markers.

Such a computer-vision based system allows the determination of the position of the structure without the requirement of actually engaging or otherwise physically interacting with the structure. For the offshore placement of large engineering structures, this greatly reduces the exposure of personnel to risk of injury and equipment to risk of damage. In the following, reference to position, unless otherwise stated, is intended to refer to 3-D position, including both x-y-z position and attitude or orientation (pitch, roll, and heading). The structure itself may be stationary i.e. with respect to the fixed reference frame or quasi-stationary i.e. moving relatively slowly compared to the imaging device.

The local positioning system may be any suitable system that can determine the instantaneous position of the imaging device. This may be provided by a positioning system of a vessel on which the imaging device is installed or may be a positioning device dedicated to the imaging device. It may also be a combination of systems, which together provide the necessary six degrees of freedom measurements for the imaging device. In one example, the local positioning system may comprise an IMU integrated with the imaging device as a portable survey unit. In this case, the IMU and the imaging device should be rigidly mechanically aligned to each other. The system or survey unit may also incorporate a calibration function to calibrate the local positioning system to the imaging device. When using the system for extended periods or in the event that the survey unit has been subject to shock, it may be desirable to have a simple self-test capability. This may be achieved by calibrating against the horizon, which, for offshore locations, provides an accurate horizontal reference. The calibration function may be partially local and partially remote e.g. with an image processing system being used to identify the horizon.

In a particular configuration, the system may comprise both a vessel's navigation equipment and a local IMU directly engaged with the imaging unit, with the local IMU providing only pitch and roll data and the vessel's navigation equipment providing x-y-z and heading data. In general, reliable and accurate heading data may only be available from expensive and complex equipment of the type that may already be present on board a survey vessel. Pitch and roll data may be provided to relatively high accuracy by less complex and costly equipment such as magnetometers. Integrating pitch and roll measurements with the imaging device can also avoid inaccuracy due to flexure or torsion of the vessel.

The term local positioning system is not intended to be restrictive on any particular principle of operation. In particular, the local positioning system may be based on technologies or techniques including: mechanical gyroscopes; fibre optic gyroscopes (FOG); laser ring gyroscopes (LRG); micro-electro-mechanical systems (MEMS) based technologies; accelerometers; magnetometers; pendulums; electrolytic inclinometers; liquid capacitive inclinometers or any combination of the above. The local IMU should preferably have a dynamic accuracy of better than 0.1°, more preferably better than 0.05° and most preferably better than 0.02°, in the pitch and roll directions. Preferably the local positioning system should be able to deliver pitch, roll and heading data at a frequency of at least 5 Hz and preferably at 20 Hz or above.

In the present document, the system may further comprise a clock arranged to time stamp the image data relative to the position data. To effectively process the image data and the position data, there must be close correlation in time between the respective measurements. For operation aboard a moving vessel, pitch and roll may change very rapidly and the position data should preferably be time stamped to an accuracy of at least 10 ms. Most preferably, the time stamp will be accurate to at least 1 ms. The required timing accuracy, including unaccounted processing and communication latencies, may be expressed as a function of the required measurement precision and the expected rate of change of the moving frame. For example aboard a vessel, it may be desirable that the timing accuracy should be better than the required pitch and roll measurement accuracy divided by the maximum expected angular rate of the vessel. The difference between capture time and transmission time may also need to be taken into account to ensure the data items are correctly associated. The clock may be a local clock applicable to the local positioning system and the imaging device. Most preferably, the clock is linked to a global timebase such as GNSS to allow readings to be correlated with other events such as a position measurement. Preferably the clock also issues a clock signal for synchronising the capture time of image data. The skilled person will be well aware of various options for ensuring image data and position data are accurately synchronised to such a clock signal.

The markers may be of any form suitable for achieving the desired position accuracy and may be adapted in number and position to specifically suit the structure to be positioned and the manner in which it is viewed. Markers as claimed in the independent claims are provided by parts of the structure itself and are, thus, virtual markers. Additionally, at least one of the markers may be removably affixed to the structure for the purpose of the position determination. This means that this marker can be removed after position determination is completed. For certain structures, the presence of markers after installation may be detrimental for various reasons, including aesthetic, safety, maintenance and weathering.

In general, at least four markers are provided on the structure, rendering three vector values for subsequent analysis. Preferably, more markers will be made available to provide redundancy in cases where one or more of the markers may be obscured, or in order to check for the possible movement of a marker. The positioning of the markers is important to achieve optimised results. In particular, it may be desirable for offshore operation on engineering structures, that at least two markers are located more than 3 metres apart. In general, greater distances between markers allows more accurate position determination from greater distances. Preferably, the markers will be located at extremities of the structure where possible. Also, for open structures i.e. where it is possible to view through the structure, it is desirable to provide markers on a front-side of the structure and on a rear-side of the structure visible from the front-side.

Physical markers may be simple visual markers such as a dot or a cross, which allow the accurate position of the marker to be robustly identified. Markers may also be more complex to allow additional information to be conveyed. It will be understood that a marker that includes additional image data such as scale or direction can assist the processing unit to compute the position of the structure. As a result, either fewer markers may be required or greater redundancy may be achieved. Preferably, at least one of the markers is a unique marker and the system is arranged to automatically identify the unique marker. It will be understood that all of the markers required to provide a determination of position may be unique markers. Physical markers may be affixed to the structure in advance and their positions relative to the structure determined by surveying techniques. During position determination of the structure, the first step may be to identify which marker is which. Automatic identification of unique markers by the system simplifies this process. In an alternative arrangement, an operator may be able to manually identify the respective markers to the processing unit.

According to a further aspect, at least one of the physical markers is a trackable marker and the system is arranged to automatically track the physical marker. In another embodiment, all of the physical markers may be trackable. For highly dynamic systems, automatic tracking of the marker or markers is advantageous. Tracking may be facilitated by knowing the geometry of the physical markers which are determined by surveying during marker installation and prior to jacket placement. If the system has "lost" a physical marker, with knowledge of the geometry of the physical markers, the system can determine where to look for the "lost" physical marker based on the position of "found" markers. Additionally, trackable markers eliminate the need for the operator to indicate the location of markers to the system. In this way the system may regularly provide updates to the determined position of the structure. The system may thus provide real-time position information for the structure. The physical markers may be high contrast images to facilitate automatic recognition, identification and trackability. High contrast images improve visibility of the physical markers. In one embodiment, each quadrant marker is a circular, black/white marker.

According to a still further aspect, the system may comprise a display, operatively connected to the processing unit and the processing unit may be arranged to display a representation of the position of the structure on the display. The display may be located at the processing unit or remotely. In one configuration the representation of the position may be overlaid onto a representation of a desired position of the structure. This allows a surveyor or crane operator to easily perceive the difference between the desired and the actual position of the structure and direct further action. In a still further embodiment the imaging device is located at a first location and the display is located at a second location and the representation of the position of the structure on the display is a representation as viewed from the second location. A number of displays may be provided at different locations. In that case, each display may depict the structure in a manner appropriate to the location of the display.

It will be further understood that various imaging devices may provide the desired function. These may include laser imaging devices, infra-red imaging or conventional camera based imaging devices. In one embodiment, the imaging device is a camera having automatic iris control, allowing use in varying lighting conditions. It will be understood that, throughout the day, the position of the sun will vary and it may be undesirable to re-locate the imaging device when the lighting condition from a particular imaging device locations prevents the acquisition of useful images. Automatic lighting control can mitigate this difficulty, allowing the operator to continue measurements using an imaging device at the same location. Additional desirable characteristics of the camera include anti-smearing and anti-blooming correction to further improve image quality. The imaging device is most preferably a calibrated camera in which the camera image frame is calibrated and known with respect to reality such that measurement of a vector made within the image frame can be converted into a true representation of the vector in reality. Such calibrated cameras may also be referred to as photogrammetry cameras. Preferably, sensor distortion is known, as well as lens distortion. Furthermore, filter distortion should be known. In this way these distortions may be compensated for in the system, either on generation of the image data or on processing of the image data in the processing unit. In one embodiment, the camera should have a trigger input allowing external control of the timing of taking an image as will be further explained below.

In one embodiment the imaging device is mounted onboard a vessel. The vessel may be a heavy lift vessel from which the structure is being positioned. In the case of a heavy lift vessel, the imaging device may be directed downwardly towards the intended location of the structure. Alternatively, the vessel may be an auxiliary vessel deployed specifically for the purpose of surveying the structure. As indicated above, in the case of mounting onboard a vessel, the local positioning system may comprise the local positioning system or navigation equipment of the vessel. In this case, the position of the imaging device within the reference frame of the vessel must be determined. e.g. by surveying prior to commencing operation. Further calibration facilities may be provided to check the accuracy of placement of the imaging device with respect to the vessel during use. This may comprise a portion of the vessel or other datum point fixed with respect to the vessel and located within a field of view of the imaging device.

In another embodiment, the imaging device may be mounted on an unmanned vehicle such as a drone vessel or an unmanned aerial vehicle (UAV). A wireless or wired communication link between the imaging device and the processing unit may be provided whereby image data and position data is sent over the link to the processing unit. In addition, control signals from the processing unit may be sent to the imaging device. Control signals may include a power on or wake-up signal.

The present invention makes possible the precise position determination of a structure from a remote location using a single imaging device. It will however be understood that the invention is not limited to a single imaging device and that further accuracy and redundancy may be achieved by providing at least two imaging devices arranged to view the structure from different perspectives. Improved accuracy may be achieved by directing first and second imaging devices to view the structure from angles generally perpendicular to each other. The first and second imaging devices may view one or more of the same markers. Alternatively, they may each view different markers. It will be understood that the positioning of the markers will generally be dependent upon whether they are to be viewed from a single location or from different locations, by one or more imaging devices. The first and second imaging devices may be located in the same moving frame of reference e.g. installed aboard the same vessel, or may be located in different frames e.g. aboard different vessels.

In one particular embodiment, the structure is an offshore jacket to be secured by piles driven into the seabed. As a result of the proposed invention, it is not necessary for personnel to board the jacket during placement to install or remove measuring instruments. The open structure of such jackets also facilitates viewing from the same direction, markers placed at both the front and backsides of the jacket.

The present document explains a method of determining the position of an offshore structure in a fixed reference frame by observations from a moving reference frame, the structure comprising a plurality of markers positioned on the structure, the method comprising: determining the positions of the plurality of markers with respect to a reference frame of the structure; viewing the structure with an imaging device from a moving reference frame to generate image data representative of the relative positions of the markers in the moving frame; determining a position of the imaging device in the fixed frame of reference and generating position data; and processing the image data and the position data to compute the position of the structure based on the predetermined positions of the markers.

A, here not-claimed, method may comprise affixing a plurality of markers to the structure and surveying the structure to determine the positions of the markers in the reference frame of the structure prior to viewing the structure from the moving reference frame. The surveying of the structure may take place on land. In the case of an offshore jacket constructed on land, this may take prior to placement offshore. After construction is complete, a surveyor may attach machine vision markers to the jacket structure. The markers are generally installed above the splash line as the markers must remain visible during placement. During surveying, the distances between markers are accurately measured. In this way, the geometry of the jacket with respect to its markers is known. This information is recorded and stored for later use in the system during jacket placement. Although surveying on land may be preferable, it will be understood that surveying onboard a barge or other vessel is also possible. In any case, surveying within a single reference frame, be it moving or fixed, is generally achievable using conventional measuring techniques.

As mentioned above, in one embodiment additional, physical markers are removable. Offshore jackets are subjected to harsh and hazardous environments. Such jackets are generally treated with anti-corrosion and fire protection coatings. A non-removable target may damage these coatings. The physical markers may, for example, be applied to thin metal or plastic sheets secured to jacket frame sections using a connection clamp. Jacket frame sections are generally cylindrical and have a diameter of about 0.5 to 1 metre. The dimensions of the jacket are application dependent but above waterline lengths of 10 metres to 50 metres or more are typical. The method may further include the removal of the physical markers subsequent to installation.

The claimed method comprises accessing an electronic file or other form of computer representation of the jacket which accurately describes the dimensions and mechanical configuration of the jacket. This is used for positioning of virtual markers on the structure corresponding to structural members or parts thereof, which can be identified both visually on viewing the structure with the imaging device and in the electronic file. Identification may take place automatically by software or may be guided by a human operator. The method may thus take place without fixing of physical markers to the structure or with a mixture of physical and virtual markers.

In a method, which is not claimed here, the imaging device provides an image of the jacket during placement. The operator or surveyor receives an image from the imaging device on a display. The surveyor manually clicks on the display using a conventional pointer device, indicating to the system that a marker is in that area of the image. In an embodiment where the markers are not unique, the surveyor can also identify the marker to the system. For example, the surveyor clicks on a marker and identifies it as "top left." This identification relates to the surveyed geometry of the jacket. Once all markers have been identified, the system can determine the position of the jacket with respect to the camera. In turn the position of the camera is known with respect to the vessel, and the vessel's position is known with respect to the Earth. In this way the position of the jacket can be determined with respect to the Earth.

Accordingly, the position of the jacket can be continuously monitored in real time. This is especially advantageous as regularly updating the determined position of the jacket allows the installation crew to take corrective action. For example, the crane operator or crew may perform adjustments to change the position of the jacket using the crane hook, taglines or tugger winches. The position of the jacket must be correct before securing the jacket with piles to the sea floor. While driving the piles into the sea floor it is generally no longer possible to take further corrective action.

A further aspect relates to a computer program product comprising instructions to perform the method described above and hereinafter when installed on a computer or processing device.

The computer program product may comprise appropriate modules to perform the above defined tasks including, but not limited to: an image acquisition software module for acquiring time-stamped image data; a position software module for acquiring time-stamped position data; a marker identification module for identifying individual markers within the image; a marker tracking module for actively tracking an identified marker; an image reconstruction module for transforming the image from the moving frame into the fixed frame of reference; and a GUI module that presents a display of the structure in the fixed frame of reference.

In one embodiment, the GUI module may be arranged to cause the display of the structure to be overlaid onto a desired position of the structure.

In another embodiment, the computer program product may further comprise a model importation module to import a computer representation of the jacket; and a structure recognition module which detects structure within the image data based on the computer representation imported by the model importation module.

It will be appreciated that the present invention is not limited to jacket placement and that the system and method are applicable to other structures used in offshore applications, including but not limited to wind turbines, drilling platforms, bridges, pipelines and the like and parts thereof.

### BRIEF DESCRIPTION OF DRAWINGS

The features and advantages of the invention will be appreciated upon reference to the following drawings, in which:
Figure 1 shows a perspective overview of a positioning system;
Figure 2 shows a detail of part of the jacket of Figure 1;
Figure 3 shows schematically the architecture of the system of Figure 1;
Figure 4 shows a depiction of image data displayed on the display of Figure 3;
Figure 5 shows a depiction of the jacket of Figure 1 on the display of Figure 3;
Figure 6 shows a schematic view of part of a non-claimed example of the system; and
Figure 7 shows a perspective overview of an example of the positioning system.

### DESCRIPTION OF ILLUSTRATIVE EMBODIMENTS

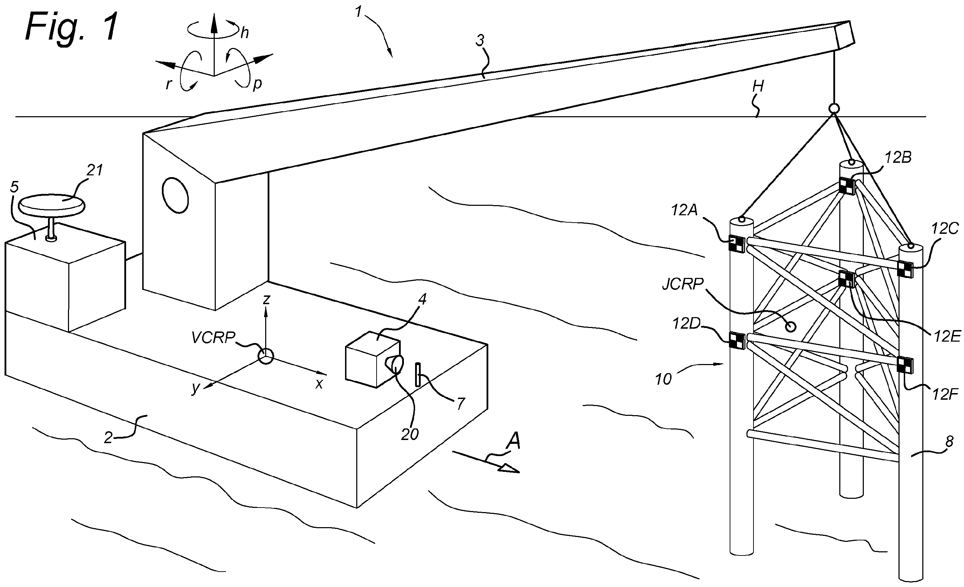

Figure 1 shows a schematic view of a positioning system 1. The system 1 is to be used for determining the position of a structure, which in this embodiment is a jacket 10 for installation offshore. In Figure 1, the jacket 10 has been provided with a number of markers 12A-F, affixed to its legs 8 and calibrated with respect to a Jacket Common Reference Point JCRP in an onshore survey operation prior to shipping. The positioning system 1 is mounted onboard a heavy lift vessel 2 having a crane 3 and comprises a survey unit 4 having a camera 20 and vessel navigation equipment 5 including a geodetic grade GNSS antenna 21. Also shown in Figure 1 is a datum point 7 located within a field of view of camera 20. The datum point 7 may be located on any convenient immovable part of the vessel 2, such as a railing or the like. The vessel navigation equipment 5 is adapted to provide cm accurate x-y-z positioning and pitch-roll-heading data with dynamic accuracy of better than 0.5°, at least in the pitch and roll directions. The survey unit 4 is positioned on the vessel 2 at a known position with respect to the Vessel Common Reference Point VCRP and calibrated prior to use in order to determine accurately the direction A in which the camera 20 is pointing. Once calibrated, the position of the datum point 7 within the field of view of the camera 20 can be observed to ensure no further changes have occurred. The survey unit 4 can also be calibrated against the horizon H. Although in Figure 1 a single survey unit 4 is shown, it will be understood that a number of similar survey units 4 may be mounted at different locations on the vessel 2, directed towards the jacket 10.

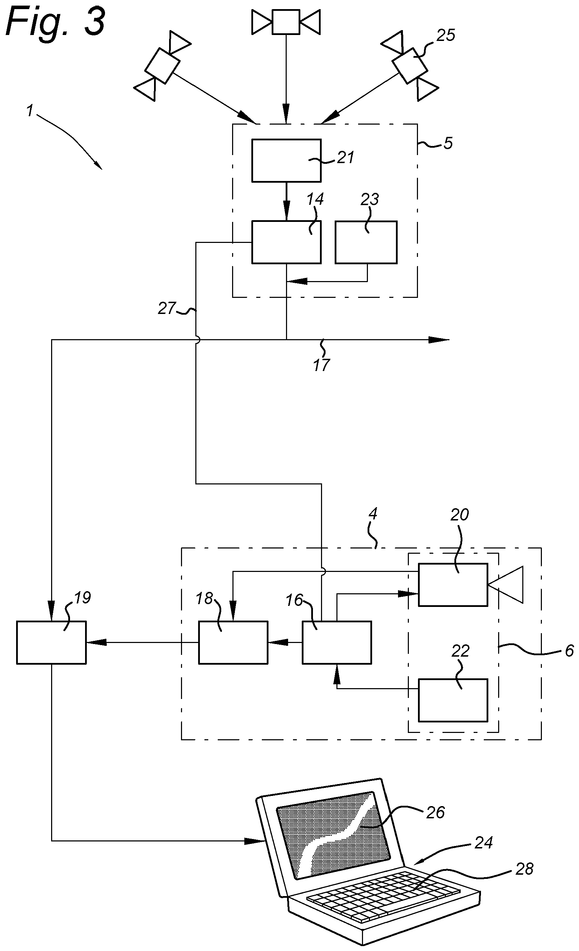

Figure 3 shows a schematic overview of the positioning system 1 showing the components in further detail. As can be seen, the survey unit 4 comprises, a local signal multiplexer 16, a local Ethernet switch 18, camera 20 and local IMU 22. The survey unit 4 comprises a frame 6 to which the camera 20 and the local IMU 22 are rigidly attached. The relative positions of these components are thus fixed with respect to each other. Once calibrated, the values can be used elsewhere in the system. In general the camera 20 and local IMU 22 will be factory calibrated together but it is not excluded that further calibration and checking can take place onboard the vessel 2 during installation and use of the system 1.

The vessel navigation equipment 5 includes the geodetic grade GNSS antenna 21, GNSS receiver 14 and vessel IMU \ Gyrocompass 23. The GNSS receiver 14 is arranged to receive positioning signals and correction data from satellite constellation 25 and generates vessel x-y-z co-ordinate data to centimetre accuracy. It also generates a pulse per second (PPS) clock signal 27 based on the GNSS signal, accurate to 1 mS. The vessel IMU will generally be a precision FOG, installed for the purpose of accurate survey and installation work and having, in conjunction with the further vessel navigation equipment 5, an accuracy of 0.5 degrees in the heading direction.

The positioning system 1 further includes a processing unit 24 having a display 26 and operator input 28 in the form of a conventional keyboard and pointer. The processing unit 24 is in this case a standard laptop computer located onboard the vessel and used by the surveyor. It will however be understood that it may also be a distributed processing arrangement with processing taking place at different locations. The display may also be remote from the processing capability. The processing unit 24 is connected to receive signals from the vessel navigation equipment 5 and the survey unit 4 via vessel Ethernet switch 19 and vessel network 17, to which other onboard equipment may be connected. It will be understood that although hard-wired connections have been shown, wireless signal transmission may equally be provided for some or all of the connections.

The positioning system 1 may comprise generally conventional components, interfaced together physically and electronically as will be further described below in order to achieve the desired functionality. In particular, the local signal multiplexer 16 is a FUGRO Starport^{™} multiplexer \ data concentrator \ terminal server, employed to trigger the camera 20 at a desired rate to perform image capture and to time stamp the multiplexed data from the local IMU 22 and the camera 20. The Ethernet switches 18 and 19 are typically Gigabit switches capable of operating at 1000 Mbits/s though slower speed operation is supported. The camera 20 is a high resolution digital camera operating according to GigE vision protocol and having automatic iris control and anti-smearing and anti-blooming correction. This allows it to compensate for changing light conditions. The camera 20 is also triggerable, having a trigger port allowing it to be triggered by an appropriate trigger signal from the local signal multiplexer 16. Camera 20 also has an Ethernet connection to the local Ethernet switch 18. The local IMU 22 is a MEMS based IMU having dynamic accuracy of better than 0.05° in the pitch and roll directions. The local IMU 22 provides serial data to the local signal multiplexer 16.

Operation of the positioning system 1 will now be described with reference to Figures 1 to 3. Accordingly, in a preliminary phase, the jacket 10 with the markers 12 affixed at appropriate locations is surveyed while on land in order to determine the precise locations of the markers 12 with respect to the jacket geometry, in particular with respect to the Jacket Common Reference Point JCRP. In this context it may be noted that there are shown a total of six markers 12A-F located on the three legs 8 of the jacket. The placement of the markers 12 has been chosen to ensure all are visible from viewing direction A and also that they provide the maximum possible spread of readings when viewed from this direction. The rearmost markers 12B, 12E are positioned to be visible through the open structure of the jacket 10 from this intended viewing direction. The positions of the lowermost markers 12D, 12E and 12F are calculated to ensure that they remain above the highest expected water level during placement. Initial surveying of the jacket 10 and markers 12 can take place using any conventional surveying equipment and may also be based on the project's engineering drawings.

In a second stage of the operation (which may take place at a time and place far removed from the preliminary phase), the jacket 10 is placed at its intended location by lowering from the vessel 2. Initial coarse positioning of the jacket 10 may take place by any appropriate means. Once the jacket 10 approaches its desired placement position, the positioning system 1 is implemented to determine precisely the momentary position of the jacket 10. To this end, the camera 20 is operated to produce an image of the jacket 10 from the direction A. For the avoidance of doubt, the direction A merely indicates a general direction of viewing, which will change during motion of the vessel 2 and jacket 10 and is not otherwise important for the following discussion.

Once operation commences, local IMU 22 generates a serial data stream of pitch-roll data for the local orientation of the survey unit 4 at a frequency of around 10 Hz. The pitch-roll data is produced asynchronously and delivered to the local signal multiplexer 16, which accurately timestamps it based on the PPS clock signal 27 and delivers it to the network 17 via the Ethernet switch 18. The local signal multiplexer 16 also generates trigger signals to camera 20, triggering the capture of images of the jacket 10 with the markers 12A to 12F at a chosen frequency. For the present purpose, a rate of 3 Hz has been found suitable. The trigger signals to the camera 20 are also read by the local signal multiplexer 16 and precisely time-stamped. This time-stamped event defines the precise moment of capture of the next packet of image data which is transmitted from the camera 20 to the network 17 via the local Ethernet switch 18. Simultaneously, the GNSS receiver 14 receives position and timing data, and position aiding data from satellites 25, allowing the precise position of the GNSS antenna 21 to be determined. It can then compute the x-y-z position of the vessel 2 based on the geometry of the vessel 2 and the position of the GNSS antenna 21 with respect to the Vessel Common Reference Point VCRP. This x-y-z position data and heading data determined by the vessel IMU 23 is also put onto the network 17 and received by the processing unit 24. In general the GNSS receiver 14 delivers position data at a frequency of 10-20 Hz, while the vessel IMU delivers data at a rate of 50Hz or above. Given that the location of the survey unit 4 with respect to the Vessel Common Reference Point VCRP has been previously calibrated, the position of the camera 20 can thus also be determined. Since all readings and data are time-stamped to the same clock signal, the processing unit 24 can correlate the readings, either by interpolation between signals or otherwise. The position data determining the position of the camera 20 at the moment an image is produced is thus associated with the respective image data.

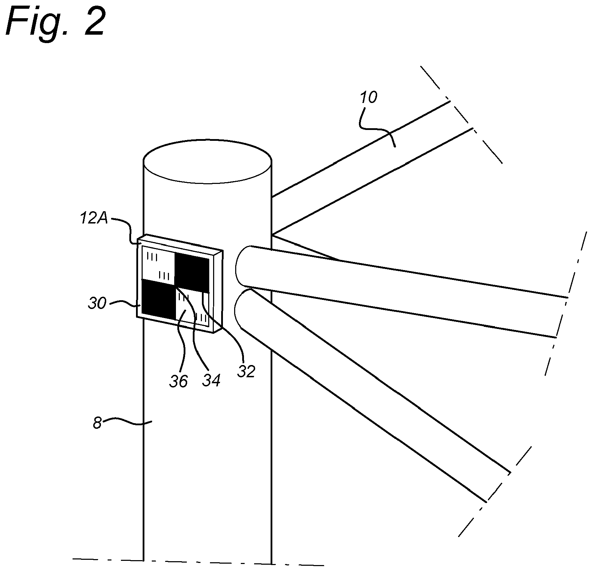

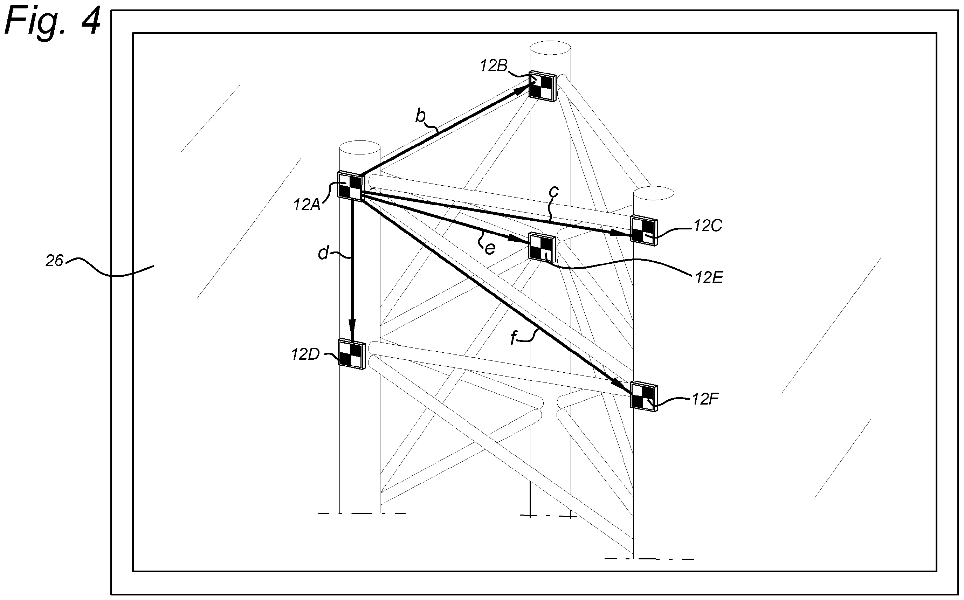

Figure 4 shows a depiction of the image data displayed on the display 26. The processing unit 24 runs software including a marker identification module, which automatically identifies the individual markers 12 within the image, based on their unique codes 36 (see Figure 2). It will be understood that such a module is optional and that manual identification of the markers 12 can also be implemented e.g. by an operator using the operator input 28 to mark and identify each marker 12 individually. Such operator input 28 may also be used to assist the automatic identification in cases of ambiguity. Identification of the markers 12 allows generation of appropriate vector representations *b-f*. By evaluating the image data with respect to the predefined survey data, the processing unit 24 can determine the relative positions of the markers 12 with respect to the moving frame of the camera 20. Once this is evaluated, the position of the jacket 10 can be converted into the fixed reference frame i.e. the Earth's geodetic reference frame, based on the camera position and the position data corresponding in time to the moment at which the image is taken.

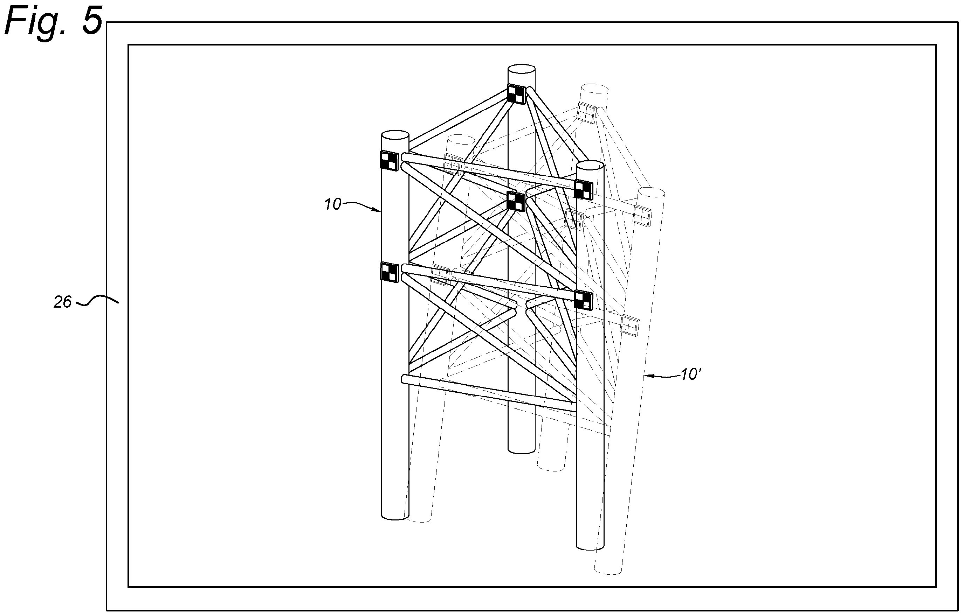

Figure 5 shows a depiction of the jacket 10 in the fixed frame of reference i.e. the real-time position of the jacket 10 overlaid onto a depiction of the desired position of the jacket, which in this view is shown in broken lines as jacket 10'. It is noted that although only the upper portion of the jacket can be seen by the camera, the display 26 shows the whole jacket 10 including the bottoms of the legs 8. This assists a crane operator in determining how far the bottom of a leg 8 must be moved to approach the desired position.

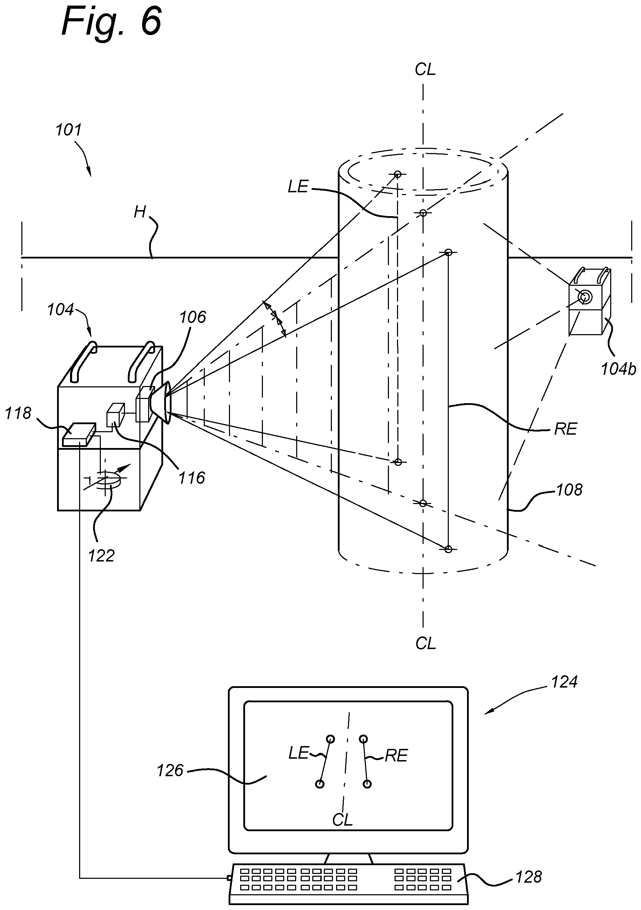

Figure 6 shows a non-claimed example in which like features to the example of figures 1-5 are provided with like reference numerals preceded by 100. The positioning system 101 of Figure 6 comprises a survey unit 104 substantially the same as that of Figure 1 including signal multiplexer 116, Ethernet switch 118, camera 120 and IMU 122. The survey unit 104 is connected through the Ethernet switch 118 to processing unit 124 having display 126 and operator input 128. Details of the vessel navigation equipment are not shown in this view but it will be understood that this functions in the same manner as described in relation to Figure 3 above.

In Figure 6, the camera is shown in use during viewing of a jacket leg 108 having a centre line CL. Here, the processing unit 124 is provided with an additional structural recognition module that operates to identify tubular structural members such as legs 108. The software module identifies the boundaries of the leg and applies software markers LE and LR to the left edge and the right edge respectively of the leg 108. This may be done automatically or with the assistance of manual pointers. These markers LE, RE are displayed on the display 126 and the structural recognition module then calculates a plane through the centre-line CL of the leg 108. This information can be calculated for all of the legs of a jacket or similar structure and can provide additional information to the positioning system 101 whereby the desired accuracy may be achieved with fewer applied markers. It will be understood that while the above has been explained in relation to the legs, other cylindrical and non-cylindrical structural members can be marked and the positioning of the structure can be undertaken relying only on these markers if desired. Also shown in Figure 6 is a second survey unit 104B, which may be provided for viewing the leg 108 at an angle to the first survey unit 104. This enables certain image ambiguities to be resolved without resort to externally applied markers.

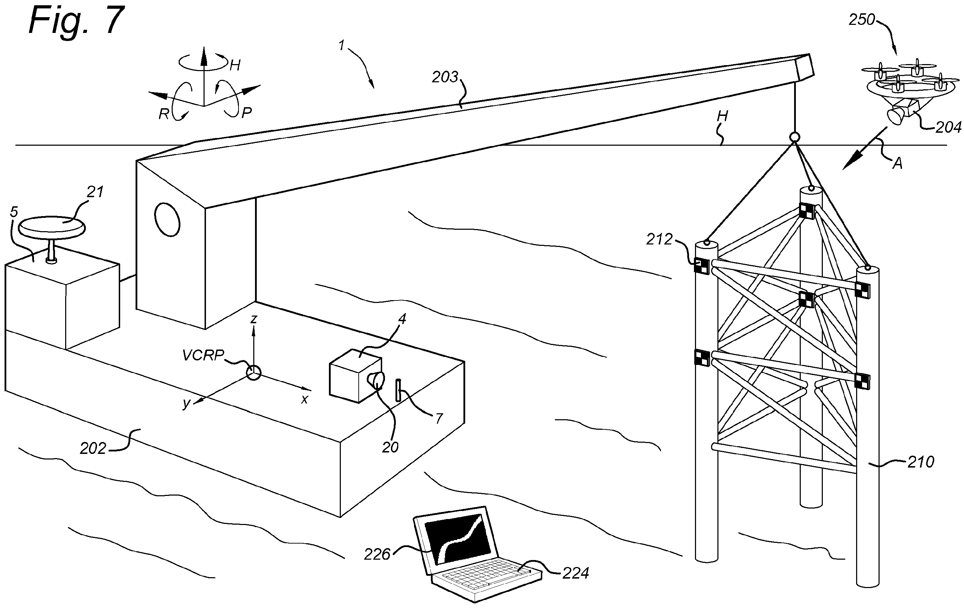

Figure 7 shows an additional survey unit 204 mounted on an aerial drone 250. The survey unit 204 may be otherwise similar to that of Figure 1 except for the fact that in this case, all of the capabilities of the vessel navigation equipment are provided on the survey unit 204 or otherwise integrated onboard the drone 250 in order to be able to determine the local position (with six degrees of freedom) of the drone 250 and the viewing direction A. The drone 250 can move the survey unit 204 to view the jacket 210 from different viewing directions A. In this case, physical markers 212 may require affixing at different locations to support the different viewing directions. In the case of Figure 7, the survey unit 204 is provided with wireless connection to the processing unit 224 onboard the vessel 202. It may also work together with a survey unit 4 onboard the vessel 202. In this case too, irrespective of the direction of viewing A, the display 226 provides the operator with an image of the jacket 210 from the perspective of the vessel 202 such that the crane operator can immediately determine how to adjust the position as required to reach the final placement.

Thus, the invention has been described by reference to certain embodiments discussed above. It will be recognized that these embodiments are susceptible to various modifications and alternative forms well known to those of skill in the art without departing from the scope of the invention as defined by the attached claims.

## Claims

1. A method of determining in real time a position of an offshore structure (10), for example an offshore jacket, while the offshore structure is being placed at a predetermined installation position with six degrees of freedom on a seafloor or on an existing subsea infrastructure using a crane (3) on a vessel (2), the position of the offshore structure being determined in a fixed frame of reference, for example the Earth's reference frame, by observations of the offshore structure with an imaging device (20) from a moving reference frame, the method comprising the following steps:
- accessing an electronic file, or other form of computer representation of the offshore structure which accurately describes the dimensions and mechanical configuration of the offshore structure, and
- using said computer file or computer representation for determining the positions of a plurality of virtual markers on the offshore structure, wherein said virtual markers are corresponding to structural members or parts of the offshore structure which can be identified both visually on viewing the structure with the imaging device and in the electronic file, and storing the positions of said plurality of virtual markers,
wherein the placement of the plurality of virtual markers has been chosen to ensure all are visible from a viewing direction and also that they provide the maximum possible spread of readings when viewed from this direction,
wherein said plurality of virtual markers provide position information of the offshore structure with six degrees of freedom by viewing said virtual markers;
- while the offshore structure is lowered and placed at the predetermined installation position by the crane (3) with six degrees of freedom, performing the actions of:
- viewing the offshore structure with the imaging device (20) to generate image data representative of the relative positions of the plurality of virtual markers in the moving reference frame;
- determining with a local positioning system (22, 23) an instantaneous position of the imaging device in the fixed reference frame and generating imaging device position data synchronized with said image data, and
- processing the image data and the imaging device position data to compute the position of the offshore structure in the fixed reference frame with six degrees of freedom by using the positions of the plurality of virtual markers in relation to the geometry of the offshore structure, as well as the relative positions of the plurality of virtual markers in the moving reference frame as derived from the image data, and the instantaneous position of the imaging device.

2. The method of claim 1, further comprising affixing a plurality of physical markers (12A-12F) to the offshore structure (10) and surveying the offshore structure to determine the positions of the physical markers in a reference frame of the offshore structure and storing survey information as to the determined positions of the markers in relation to the geometry of the structure prior to viewing the structure from the moving reference frame.

3. The method of claim 1 or 2, wherein determining the instantaneous position of the imaging device takes place with a local positioning system, which tracks the momentary position of the imaging device.

4. The method according to claim 3, wherein said local positioning system comprises an IMU (22) engaged with the imaging device (20) and configured to provide pitch and roll data, and the vessel comprising vessel navigation equipment (5) configured to provide x-y-z and heading data.

5. The method according to any of the preceding claims, wherein the imaging device is mounted on an unmanned vehicle such as a drone or an unmanned aerial vehicle.

6. The method according to any of the preceding claims, further comprising correlating the measurement times for the generated image data and the imaging device position data, involving issuing clock signals to synchronise capture triggering times for the image data and the imaging device position data, and/or involving time-stamping the image data and the imaging device position data to a same clock signal with an accuracy of, preferably, at least 10 ms, more preferably at least 1 ms;
said clock signals being, preferably, linked to a GNSS timebase.

7. The method according to any one of the preceding claims, comprising:
- identifying the structural members or parts of the structure, by visual inspection of the offshore structure with the imaging device and/or in the electronic file.

8. The method according to any of the preceding claims, further comprising said placing said offshore structure at said predetermined installation position being performed by using the crane (3) on the vessel (2) and:
- displaying in real time a representation of the computed position of the offshore structure (10) on a display at the vessel, and
- overlaying the representation of the computed position of the offshore structure onto a representation of a desired position (10') of the offshore structure to allow an operator of the crane (3) to perform crane adjustments to correct the position of the offshore structure (10), e.g., by using a crane hook, taglines or tugger winches.

9. The method according to any of the preceding claims, further comprising moving the structure (10) on the basis of the computed position of the offshore structure in order to approach it to said predetermined installation position of the structure and fixing the offshore structure at said predetermined installation position.

10. A system (1) for determining in real time a position with six degrees of freedom of an offshore structure (10), for example an offshore jacket, while the offshore structure is being placed at a predetermined installation position with six degrees of freedom on a seafloor or on an existing subsea infrastructure using a crane (3) on a vessel (2), the position of the offshore structure being determined in a fixed reference frame, for example the Earth's reference frame, by observations of the offshore structure with an imaging device (20) from a moving reference frame, the system comprising:
- a processing unit (24) configured to:
- allow access to an electronic file, or other form of computer representation of the offshore structure which accurately describes the dimensions and mechanical configuration of the offshore structure, and
- allow using said computer file or computer representation for determining the positions of a plurality of virtual markers on the offshore structure, wherein said virtual markers are corresponding to structural members or parts of the offshore structure which can be identified both visually on viewing the structure with the imaging device and in the electronic file, and storing the positions of said plurality of virtual markers,
wherein the placement of the plurality of virtual markers has been chosen to ensure all are visible from a viewing direction and also that they provide the maximum possible spread of readings when viewed from this direction,
wherein said plurality of virtual markers provide position information of the offshore structure with six degrees of freedom by viewing said virtual markers;
- an imaging device (20) configured to view the offshore structure and to generate image data representative of the relative positions of the virtual markers in the moving reference frame;
- a local positioning system (22, 23), arranged to determine an instantaneous position of the imaging device in the fixed reference frame and generate imaging device position data synchronized with said image data;
- the processing unit (24) also being configured to:
- process the image data and the imaging device position data to compute the position of the offshore structure in the fixed reference frame with six degrees of freedom by using the positions of the plurality of virtual markers in relation to the geometry of the offshore structure, as well as the relative positions of the plurality of virtual markers in the moving reference frame as derived from the image data, and the instantaneous position of the imaging device.

11. The system (1) according to claim 10, wherein the system also includes the offshore structure with the plurality of virtual markers on the offshore structure.

12. The system according to claim 11, wherein the offshore structure comprises at least one physical marker (12a-12F) for the purpose of the position determination, which is preferably affixed to the structure in a removable manner, the system also storing survey information as to the positions of the at least one physical marker in relation to the geometry of the structure.

13. The system (1) according to claim 12, wherein the at least one physical marker (12) is a unique marker and the system is arranged to automatically identify the unique marker.

14. The system (1) according to any of the claims 10-13, further comprising a vessel (2) and a crane (3) on the vessel (2), and comprising a display (26) on the vessel (2), the display (26) being operatively connected to the processing unit (24), and the processing unit is arranged to display in real time a representation of the computed position of the offshore structure (10) on the display, and to overlay the representation of the computed position of the offshore structure onto a representation of a desired position (10') of the offshore structure to allow an operator of the crane (3) to perform crane adjustments to correct the position of the offshore structure (10), e.g., by using a crane hook, taglines or tugger winches.

15. The system (1) according to claim 14, wherein the imaging device (20) is located at a first location and the display (26) is located at a second location and the representation of the position of the structure (10) on the display is a representation as viewed from the second location.

16. The system according to any of the claims 14-15, wherein said local positioning system comprises an IMU (22) engaged with the imaging device (20) and configured to provide pitch and roll data, and the vessel comprising vessel navigation equipment (5) configured to provide x-y-z and heading data.

17. The system (1) according to any of the claims 14-16, wherein the imaging device (20) is mounted onboard the vessel (2) or an unmanned vehicle (250) such as a drone or an unmanned aerial vehicle.

18. The system (1) according to any of the claims 14-16, wherein the imaging device (20) is mounted onboard the vessel (2), and the vessel comprises a datum point (7) fixed with respect to the vessel (2) and located within a field of view of the imaging device (20).

19. A computer program product comprising instructions allowing a processing unit to perform the method steps of the processing unit as defined in claim 10, when installed on the processing unit, comprising a model importation module to import the computer representation, e.g. in the form of an electronic file, of the offshore structure which describes dimensions and a mechanical configuration of the structure, and a structure recognition module for positioning of the virtual markers on the offshore structure corresponding to structural members or parts thereof using the computer representation.

20. The computer program product according to claim 19, comprising:
- an image acquisition software module for acquiring time-stamped image data representative of the relative positions of the virtual markers in a moving reference frame;
- a position software module for acquiring time-stamped imaging device position data synchronized with said image data;
- a marker identification module for identifying individual virtual markers within the image data;
- a marker tracking module for actively tracking the identified virtual markers;
- an image reconstruction module for transforming the image data from the moving reference frame into the fixed frame of reference,
- a processing module for processing the image data and the imaging device position data to compute the position of the offshore structure in the fixed reference frame with six degrees of freedom by using the positions of the virtual markers on the offshore structure, as well as the marker positions of the virtual markers as derived from the image data, and the imaging device position data, and
- a GUI module that presents a display of the structure in the fixed frame of reference.

## Patentansprüche

1. Verfahren zum Bestimmen einer Position einer Offshore-Struktur (10), beispielsweise eines Offshore-Jackets, in Echtzeit, während die Offshore-Struktur an einer vorbestimmten Installationsposition mit sechs Freiheitsgraden auf einem Meeresboden oder auf einer bestehenden Unterseeinfrastruktur unter Verwendung eines Krans (3) auf einem Schiff (2) platziert wird, wobei die Position der Offshore-Struktur in einem festen Referenzrahmen, beispielsweise dem Erdreferenzrahmen, durch Beobachtungen der Offshore-Struktur mit einer Bildgebungsvorrichtung (20) von einem sich bewegenden Referenzrahmen aus bestimmt wird, wobei das Verfahren die folgenden Schritte umfasst:
- Zugreifen auf eine elektronische Datei oder eine andere Form von Computerdarstellung der Offshore-Struktur, die die Abmessungen und die mechanische Auslegung der Offshore-Struktur genau beschreibt, und
- Verwenden der Computerdatei oder Computerdarstellung zum Bestimmen der Positionen einer Mehrzahl von virtuellen Markierungen auf der Offshore-Struktur, wobei die virtuellen Markierungen strukturellen Elementen oder Teilen der Offshore-Struktur entsprechen, die sowohl visuell bei Betrachten der Struktur mit der Bildgebungsvorrichtung als auch in der elektronischen Datei identifiziert werden können, und Speichern der Positionen der Mehrzahl von virtuellen Markierungen,
wobei die Platzierung der Mehrzahl von virtuellen Markierungen derart ausgewählt wurde, dass sichergestellt ist, dass alle aus einer Betrachtungsrichtung sichtbar sind und dass sie zudem bei Betrachtung aus dieser Richtung die größtmögliche Streuung von Messwerten bereitstellen,
wobei die Mehrzahl von virtuellen Markierungen durch Betrachten der virtuellen Markierungen Positionsinformationen der Offshore-Struktur mit sechs Freiheitsgraden bereitstellen;
- während die Offshore-Struktur durch den Kran (3) abgesenkt und an der vorbestimmten Installationsposition mit sechs Freiheitsgraden platziert wird, Durchführen der folgenden Aktionen:
- Betrachten der Offshore-Struktur mit der Bildgebungsvorrichtung (20) zum Erzeugen von Bilddaten, die die relativen Positionen der Mehrzahl von virtuellen Markierungen in dem sich bewegenden Referenzrahmen darstellen;
- Bestimmen einer momentanen Position der Bildgebungsvorrichtung in dem festen Referenzrahmen mit einem lokalen Positionsbestimmungssystem (22, 23) und Erzeugen von mit den Bilddaten synchronisierten Positionsdaten der Bildgebungsvorrichtung, und
- Verarbeiten der Bilddaten und der Positionsdaten der Bildgebungsvorrichtung zum Berechnen der Position der Offshore-Struktur in dem festen Referenzrahmen mit sechs Freiheitsgraden unter Verwendung der Positionen der Mehrzahl von virtuellen Markierungen in Relation zur Geometrie der Offshore-Struktur sowie der relativen Positionen der Mehrzahl von virtuellen Markierungen in dem sich bewegenden Referenzrahmen, abgeleitet aus den Bilddaten und der momentanen Position der Bildgebungsvorrichtung.

2. Verfahren nach Anspruch 1, ferner umfassend Befestigen einer Mehrzahl von physischen Markierungen (12A-12F) an der Offshore-Struktur (10) und Vermessen der Offshore-Struktur zum Bestimmen der Positionen der physischen Markierungen in einem Referenzrahmen der Offshore-Struktur und Speichern von Vermessungsinformationen hinsichtlich der bestimmten Positionen der Markierungen in Relation zur Geometrie der Struktur vor Betrachten der Struktur von dem sich bewegenden Referenzrahmen aus.

3. Verfahren nach Anspruch 1 oder 2, wobei Bestimmen der momentanen Position der Bildgebungsvorrichtung mit einem lokalen Positionsbestimmungssystem erfolgt, das die augenblickliche Position der Bildgebungsvorrichtung verfolgt.

4. Verfahren nach Anspruch 3, wobei das lokale Positionsbestimmungssystem eine IMU (22) umfasst, die mit der Bildgebungsvorrichtung (20) in Eingriff steht und dazu ausgelegt ist, Nick- und Rollbewegungsdaten bereitzustellen, und das Schiff eine Schiffsnavigationseinrichtung (5) umfasst, die dazu ausgelegt ist, X-Y-Z- und Kursdaten bereitzustellen.

5. Verfahren nach einem der vorhergehenden Ansprüche, wobei die Bildgebungsvorrichtung auf einem unbemannten Fahrzeug wie etwa einer Drohne oder einem unbemannten Luftfahrzeug montiert ist.

6. Verfahren nach einem der vorhergehenden Ansprüche, ferner umfassend Korrelieren der Messzeiten für die erzeugten Bilddaten und die Positionsdaten der Bildgebungsvorrichtung, beinhaltend Ausgeben von Taktsignalen zum Synchronisieren von Erfassungsauslösezeiten für die Bilddaten und die Positionsdaten der Bildgebungsvorrichtung und/oder beinhaltend Zeitstempeln der Bilddaten und der Positionsdaten der Bildgebungsvorrichtung auf ein gleiches Taktsignal mit einer Genauigkeit von vorzugsweise mindestens 10 ms, stärker bevorzugt mindestens 1 ms;
wobei die Taktsignale vorzugsweise mit einer GNSS-Zeitbasis verknüpft sind.

7. Verfahren nach einem der vorhergehenden Ansprüche, umfassend:
- Identifizieren der strukturellen Elemente oder Teile der Struktur durch visuelle Prüfung der Offshore-Struktur mit der Bildgebungsvorrichtung und/oder in der elektronischen Datei.

8. Verfahren nach einem der vorhergehenden Ansprüche, ferner umfassend, dass das Platzieren der Offshore-Struktur an der vorbestimmten Installationsposition unter Verwendung des Krans (3) auf dem Schiff (2) durchgeführt wird, und:
- Anzeigen einer Darstellung der berechneten Position der Offshore-Struktur (10) in Echtzeit auf einer Anzeige in dem Schiff, und
- Überlagern der Darstellung der berechneten Position der Offshore-Struktur auf eine Darstellung einer gewünschten Position (10') der Offshore-Struktur, um einem Bediener des Krans (3) zu ermöglichen, Kranjustierungen zum Korrigieren der Position der Offshore-Struktur (10), z. B. unter Verwendung eines Kranhakens, von Halteseilen oder von Zugwinden, durchzuführen.

9. Verfahren nach einem der vorhergehenden Ansprüche, ferner umfassend Bewegen der Struktur (10) auf Basis der berechneten Position der Offshore-Struktur, um sie der vorbestimmten Installationsposition der Struktur anzunähern, und Befestigen der Offshore-Struktur an der vorbestimmten Installationsposition.

10. System (1) zum Bestimmen einer Position einer Offshore-Struktur (10), beispielsweise eines Offshore-Jackets, mit sechs Freiheitsgraden in Echtzeit, während die Offshore-Struktur an einer vorbestimmten Installationsposition mit sechs Freiheitsgraden auf einem Meeresboden oder auf einer bestehenden Unterseeinfrastruktur unter Verwendung eines Krans (3) auf einem Schiff (2) platziert wird, wobei die Position der Offshore-Struktur in einem festen Referenzrahmen, beispielsweise dem Erdreferenzrahmen, durch Beobachtungen der Offshore-Struktur mit einer Bildgebungsvorrichtung (20) von einem sich bewegenden Referenzrahmen aus bestimmt wird, wobei das System Folgendes umfasst:
- eine Verarbeitungseinheit (24), die zu Folgendem ausgelegt ist:
- Ermöglichen eines Zugriffs auf eine elektronische Datei oder eine andere Form von Computerdarstellung der Offshore-Struktur, die die Abmessungen und die mechanische Auslegung der Offshore-Struktur genau beschreibt, und
- Ermöglichen eines Verwendens der Computerdatei oder Computerdarstellung zum Bestimmen der Positionen einer Mehrzahl von virtuellen Markierungen auf der Offshore-Struktur, wobei die virtuellen Markierungen strukturellen Elementen oder Teilen der Offshore-Struktur entsprechen, die sowohl visuell bei Betrachten der Struktur mit der Bildgebungsvorrichtung als auch in der elektronischen Datei identifiziert werden können, und Speichern der Positionen der Mehrzahl von virtuellen Markierungen,
wobei die Platzierung der Mehrzahl von virtuellen Markierungen derart ausgewählt wurde, dass sichergestellt ist, dass alle aus einer Betrachtungsrichtung sichtbar sind und dass sie zudem bei Betrachtung aus dieser Richtung die größtmögliche Streuung von Messwerten bereitstellen,
wobei die Mehrzahl von virtuellen Markierungen durch Betrachten der virtuellen Markierungen Positionsinformationen der Offshore-Struktur mit sechs Freiheitsgraden bereitstellen;
- eine Bildgebungsvorrichtung (20), die dazu ausgelegt ist, die Offshore-Struktur zu betrachten und Bilddaten zu erzeugen, die die relativen Positionen der virtuellen Markierungen in dem sich bewegenden Referenzrahmen darstellen;
- ein lokales Positionsbestimmungssystem (22, 23), das dazu eingerichtet ist, eine momentane Position der Bildgebungsvorrichtung in dem festen Referenzrahmen zu bestimmen und mit den Bilddaten synchronisierte Positionsdaten der Bildgebungsvorrichtung zu erzeugen;
- wobei die Verarbeitungseinheit (24) zudem zu Folgendem ausgelegt ist:
- Verarbeiten der Bilddaten und der Positionsdaten der Bildgebungsvorrichtung zum Berechnen der Position der Offshore-Struktur in dem festen Referenzrahmen mit sechs Freiheitsgraden unter Verwendung der Positionen der Mehrzahl von virtuellen Markierungen in Relation zur Geometrie der Offshore-Struktur sowie der relativen Positionen der Mehrzahl von virtuellen Markierungen in dem sich bewegenden Referenzrahmen, abgeleitet aus den Bilddaten und der momentanen Position der Bildgebungsvorrichtung.

11. System (1) nach Anspruch 10, wobei das System zudem die Offshore-Struktur mit der Mehrzahl von virtuellen Markierungen auf der Offshore-Struktur umfasst.

12. System nach Anspruch 11, wobei die Offshore-Struktur mindestens eine physische Markierung (12a-12F) zum Zweck der Positionsbestimmung umfasst, die vorzugsweise auf entfernbare Weise an der Struktur befestigt ist, wobei das System zudem Vermessungsinformationen hinsichtlich der Positionen der mindestens einen physischen Markierung in Relation zur Geometrie der Struktur speichert.

13. System (1) nach Anspruch 12, wobei die mindestens eine physische Markierung (12) eine eindeutige Markierung ist und das System dazu eingerichtet ist, die eindeutige Markierung automatisch zu identifizieren.

14. System (1) nach einem der Ansprüche 10-13, ferner umfassend ein Schiff (2) und einen Kran (3) auf dem Schiff (2), und umfassend eine Anzeige (26) auf dem Schiff (2), wobei die Anzeige (26) mit der Verarbeitungseinheit (24) wirkverbunden ist und die Verarbeitungseinheit dazu eingerichtet ist, eine Darstellung der berechneten Position der Offshore-Struktur (10) in Echtzeit auf der Anzeige anzuzeigen und die Darstellung der berechneten Position der Offshore-Struktur auf eine Darstellung einer gewünschten Position (10') der Offshore-Struktur zu überlagern, um einem Bediener des Krans (3) zu ermöglichen, Kranjustierungen zum Korrigieren der Position der Offshore-Struktur (10), z. B. unter Verwendung eines Kranhakens, von Halteseilen oder von Zugwinden, durchzuführen.

15. System (1) nach Anspruch 14, wobei sich die Bildgebungsvorrichtung (20) an einer ersten Stelle befindet und sich die Anzeige (26) an einer zweiten Stelle befindet und die Darstellung der Position der Struktur (10) auf der Anzeige eine Darstellung bei Betrachtung von der zweiten Stelle aus ist.

16. System nach einem der Ansprüche 14-15, wobei das lokale Positionsbestimmungssystem eine IMU (22) umfasst, die mit der Bildgebungsvorrichtung (20) in Eingriff steht und dazu ausgelegt ist, Nick- und Rollbewegungsdaten bereitzustellen, und das Schiff eine Schiffsnavigationseinrichtung (5) umfasst, die dazu ausgelegt ist, X-Y-Z- und Kursdaten bereitzustellen.

17. System (1) nach einem der Ansprüche 14-16, wobei die Bildgebungsvorrichtung (20) an Bord des Schiffes (2) oder eines unbemannten Fahrzeugs (250) wie etwa einer Drohne oder eines unbemannten Luftfahrzeugs montiert ist.

18. System (1) nach einem der Ansprüche 14-16, wobei die Bildgebungsvorrichtung (20) an Bord des Schiffes (2) montiert ist und das Schiff einen Bezugspunkt (7) umfasst, der im Hinblick auf das Schiff (2) feststehend ist und sich innerhalb eines Sichtfelds der Bildgebungsvorrichtung (20) befindet.

19. Computerprogrammprodukt, umfassend Anweisungen, die einer Verarbeitungseinheit ermöglichen, die Verfahrensschritte der Verarbeitungseinheit wie in Anspruch 10 definiert durchzuführen, wenn es auf der Verarbeitungseinheit installiert ist, umfassend ein Modellimportmodul zum Importieren der Computerdarstellung der Offshore-Struktur, z. B. in Form einer elektronischen Datei, die Abmessungen und eine mechanische Auslegung der Struktur beschreibt, und ein Strukturerkennungsmodul zum Positionieren der virtuellen Markierungen auf der Offshore-Struktur, die strukturellen Elementen oder Teilen davon entsprechen, unter Verwendung der Computerdarstellung.

20. Computerprogrammprodukt nach Anspruch 19, umfassend:
- ein Bilderfassungssoftwaremodul zum Erfassen zeitgestempelter Bilddaten, die die relativen Positionen der virtuellen Markierungen in einem sich bewegenden Referenzrahmen darstellen;
- ein Positionssoftwaremodul zum Erfassen zeitgestempelter Positionsdaten der Bildgebungsvorrichtung, die mit den Bilddaten synchronisiert sind;
- ein Markierungsidentifikationsmodul zum Identifizieren einzelner virtueller Markierungen in den Bilddaten;
- ein Markierungsnachverfolgungsmodul zum aktiven Nachverfolgen der identifizierten virtuellen Markierungen;
- ein Bildrekonstruktionsmodul zum Überführen der Bilddaten von dem sich bewegenden Referenzrahmen in den festen Referenzrahmen,
- ein Verarbeitungsmodul zum Verarbeiten der Bilddaten und der Positionsdaten der Bildgebungsvorrichtung zum Berechnen der Position der Offshore-Struktur in dem festen Referenzrahmen mit sechs Freiheitsgraden unter Verwendung der Positionen der virtuellen Markierungen auf der Offshore-Struktur sowie der Markierungspositionen der virtuellen Markierungen, abgeleitet aus den Bilddaten und den Positionsdaten der Bildgebungsvorrichtung, und
- ein GUI-Modul, das eine Anzeige der Struktur in dem festen Referenzrahmen darstellt.

## Revendications

1. Procédé de détermination en temps réel d'une position d'une structure en haute mer (10), par exemple une jaquette en mer, pendant que la structure en haute mer est en cours de placement à une position d'installation prédéterminée suivant six degrés de liberté sur un fond marin ou une infrastructure sous-marine existante au moyen d'une grue (3) sur un navire (2), la position de la structure en haute mer étant déterminée dans un cadre de référence fixe, par exemple le cadre de référence de la Terre, par des observations de la structure en haute mer à l'aide d'un dispositif d'imagerie (20) depuis un cadre de référence mobile, le procédé comprenant les étapes suivantes :
- l'accès à un fichier électronique ou à une autre forme de représentation informatique de la structure en haute mer qui décrit avec exactitude les dimensions et la configuration mécanique de la structure en haute mer, et
- l'utilisation dudit fichier informatique ou de ladite représentation informatique pour déterminer les positions d'une pluralité de marqueurs virtuels sur la structure en haute mer, dans lequel lesdits marqueurs virtuels correspondent à des éléments de structure ou des parties de la structure en haute mer qui peuvent être identifiés à la fois visuellement à la vue de la structure à l'aide du dispositif d'imagerie et dans le fichier électronique, et le stockage des positions de ladite pluralité de marqueurs virtuels,
dans lequel le placement de la pluralité de marqueurs virtuels a été choisi pour garantir qu'ils soient tous visibles depuis une direction de visualisation et qu'ils fournissent l'étendue maximale possible de relevés lorsque vus depuis cette direction,
dans lequel ladite pluralité de marqueurs virtuels donnent des informations de position de la structure en haute mer suivant six degrés de liberté par la visualisation desdits marqueurs virtuels ;
- pendant que la structure en haute mer est abaissée et placée à la position d'installation prédéterminée par la grue (3) suivant six degrés de liberté, l'exécution des actions suivantes :
- la visualisation de la structure en haute mer à l'aide du dispositif d'imagerie (20) pour générer des données d'image représentant les positions relatives de la pluralité de marqueurs virtuels dans le cadre de référence mobile ;
- la détermination au moyen d'un système de positionnement local (22, 23) d'une position instantanée du dispositif d'imagerie dans le cadre de référence fixe et la génération de données de position de dispositif d'imagerie synchronisées avec lesdites données d'image, et
- le traitement des données d'image et des données de position de dispositif d'imagerie pour calculer la position de la structure en haute mer dans le cadre de référence fixe suivant six degrés de liberté au moyen des positions de la pluralité de marqueurs virtuels en relation avec la géométrie de la structure en haute mer, ainsi que les positions relatives de la pluralité de marqueurs virtuels dans le cadre de référence mobile telles que dérivées des données d'image, et la position instantanée du dispositif d'imagerie.

2. Procédé selon la revendication 1, comprenant en outre la fixation d'une pluralité de marqueurs physiques (12A-12F) sur la structure en haute mer (10) et l'étude de la structure en haute mer pour déterminer les positions des marqueurs physiques dans un cadre de référence de la structure en haute mer et le stockage d'informations d'étude concernant les positions déterminées des marqueurs en relation avec la géométrie de la structure avant de visualiser la structure depuis le cadre de référence mobile.

3. Procédé selon la revendication 1 ou 2, dans lequel la détermination de la position instantanée du dispositif d'imagerie a lieu à l'aide d'un système de positionnement local, qui suit la position momentanée du dispositif d'imagerie.

4. Procédé selon la revendication 3, dans lequel ledit système de positionnement local comprend une IMU (22) en liaison avec le dispositif d'imagerie (20) et configurée pour fournir des données de roulis et de tangage, et le navire comprenant un équipement de navigation de navire (5) conçu pour fournir des données x-y-z et de cap.

5. Procédé selon l'une quelconque des revendications précédentes, dans lequel le dispositif d'imagerie est monté sur un véhicule sans pilote tel qu'un drone ou un véhicule aérien sans pilote.

6. Procédé selon l'une quelconque des revendications précédentes, comprenant en outre la corrélation des temps de mesure pour les données d'image générées et les données de position de dispositif d'imagerie, impliquant la délivrance de signaux d'horloge pour synchroniser des temps de déclenchement pour les données d'image et les données de position de dispositif d'imagerie, et/ou impliquant l'horodatage des données d'image et des données de position de dispositif d'imagerie sur un même signal d'horloge suivant une précision, préférablement d'au moins 10 ms, plus préférablement d'au moins 1 ms ; lesdits signaux d'horloge étant de préférence liés à une base de temps GNSS.

7. Procédé selon l'une quelconque des revendications précédentes, comprenant :
- l'identification des éléments de structure ou des parties de la structure, par inspection visuelle de la structure en haute mer à l'aide du dispositif d'imagerie et/ou dans le fichier électronique.

8. Procédé selon l'une quelconque des revendications précédentes, comprenant en outre ledit placement de ladite structure en haute mer à ladite position d'installation prédéterminée exécuté au moyen de la grue (3) sur le navire (2) et :
- l'affichage en temps réel d'une représentation de la position calculée de la structure en haute mer (10) sur un écran sur le navire, et
- la superposition de la représentation de la position calculée de la structure en haute mer sur une représentation d'une position souhaitée (10') de la structure en haute mer pour permettre à un opérateur de la grue (3) d'effectuer des réglages de la grue pour corriger la position de la structure en haute mer (10), p. ex. au moyen d'un crochet, de câbles stabilisateurs ou de treuils.

9. Procédé selon l'une quelconque des revendications précédentes, comprenant en outre le déplacement de la structure (10) sur la base de la position calculée de la structure en haute mer afin de l'approcher de ladite position d'installation prédéterminée de la structure et la fixation de la structure en haute mer à ladite position d'installation prédéterminée.

10. Système (1) de détermination en temps réel d'une position suivant six degrés de liberté d'une structure en haute mer (10), par exemple une jaquette en mer, pendant que la structure en haute mer est en cours de placement à une position d'installation prédéterminée suivant six degrés de liberté sur un fond marin ou une infrastructure sous-marine existante au moyen d'une grue (3) sur un navire (2), la position de la structure en haute mer étant déterminée dans un cadre de référence fixe, par exemple le cadre de référence de la Terre, par des observations de la structure en haute mer à l'aide d'un dispositif d'imagerie (20) depuis un cadre de référence mobile, le système comprenant :
- une unité de traitement (24) configurée pour :
- permettre l'accès à un fichier électronique ou à une autre forme de représentation informatique de la structure en haute mer qui décrit avec exactitude les dimensions et la configuration mécanique de la structure en haute mer, et
- permettre l'utilisation dudit fichier informatique ou de ladite représentation informatique pour déterminer les positions d'une pluralité de marqueurs virtuels sur la structure en haute mer, dans lequel lesdits marqueurs virtuels correspondent à des éléments de structure ou des parties de la structure en haute mer qui peuvent être identifiés à la fois visuellement à la vue de la structure à l'aide du dispositif d'imagerie et dans le fichier électronique, et le stockage des positions de ladite pluralité de marqueurs virtuels,
dans lequel le placement de la pluralité de marqueurs virtuels a été choisi pour garantir qu'ils soient tous visibles depuis une direction de visualisation et qu'ils fournissent l'étendue maximale possible de relevés lorsque vus depuis cette direction,
dans lequel ladite pluralité de marqueurs virtuels donnent des informations de position de la structure en haute mer suivant six degrés de liberté par la visualisation desdits marqueurs virtuels ;
- un dispositif d'imagerie (20) configuré pour visualiser la structure en haute mer et pour générer des données d'image représentant les positions relatives des marqueurs virtuels dans le cadre de référence mobile ;
- un système de positionnement local (22, 23) conçu pour déterminer une position instantanée du dispositif d'imagerie dans le cadre de référence fixe et générer des données de position de dispositif d'imagerie synchronisées avec lesdites données d'image ;
- l'unité de traitement (24) étant également configurée pour :
- traiter les données d'image et des données de position de dispositif d'imagerie pour calculer la position de la structure en haute mer dans le cadre de référence fixe suivant six degrés de liberté au moyen des positions de la pluralité de marqueurs virtuels en relation avec la géométrie de la structure en haute mer, ainsi que les positions relatives de la pluralité de marqueurs virtuels dans le cadre de référence mobile telles que dérivées des données d'image, et la position instantanée du dispositif d'imagerie.

11. Système (1) selon la revendication 10, dans lequel le système comprend également la structure en haute mer avec la pluralité de marqueurs virtuels sur la structure en haute mer.

12. Système selon la revendication 11, dans lequel la structure en haute mer comprend au moins un marqueur physique (12A-12F) à des fins de détermination de position, qui est de préférence fixé sur la structure de manière amovible, le système stockant également des informations d'étude concernant les positions de l'au moins un marqueur physique en relation avec la géométrie de la structure.

13. Système (1) selon la revendication 12, dans lequel l'au moins un marqueur physique (12) est un marqueur unique et le système est conçu pour identifier automatiquement le marqueur unique.

14. Système (1) selon l'une quelconque des revendications 10 à 13, comprenant en outre un navire (2) et une grue (3) sur le navire (2), et comprenant un écran (26) sur le navire (2), l'écran (26) étant connecté en fonctionnement à l'unité de traitement (24), et l'unité de traitement étant conçue pour afficher en temps réel une représentation de la position calculée de la structure en haute mer (10) sur l'écran, et pour superposer la représentation de la position calculée de la structure en haute mer sur une représentation d'une position souhaitée (10') de la structure en haute mer pour permettre à un opérateur de la grue (3) d'effectuer des réglages de la grue pour corriger la position de la structure en haute mer (10), p. ex. au moyen d'un crochet, de câbles stabilisateurs ou de treuils.

15. Système (1) selon la revendication 14, dans lequel le dispositif d'imagerie (20) est situé à un premier emplacement et l'écran (26) est situé à un second emplacement et la représentation de la position de la structure (10) sur l'écran est une représentation vue depuis le second emplacement.

16. Système selon l'une quelconque des revendications 14 et 15, dans lequel ledit système de positionnement local comprend une IMU (22) en liaison avec le dispositif d'imagerie (20) et configurée pour fournir des données de roulis et de tangage, et le navire comprenant n équipement de navigation de navire (5) conçu pour fournir des données x-y-z et de cap.

17. Système (1) selon l'une quelconque des revendications 14 à 16, dans lequel le dispositif d'imagerie (20) est monté à bord du navire (2) ou d'un véhicule sans pilote (250) tel qu'un drone ou un véhicule aérien sans pilote.

18. Système (1) selon l'une quelconque des revendications 14 à 16, dans lequel le dispositif d'imagerie (20) est monté à bord du navire (2), et le navire comprend un point de référence (7) fixe par rapport au navire (2) et situé à l'intérieur d'un champ de vision du dispositif d'imagerie (20).

19. Produit programme informatique comprenant des instructions permettant à une unité de traitement d'exécuter les étapes de procédé de l'unité de traitement telle que définie dans la revendication 10, lorsqu'il est installé sur l'unité de traitement, comprenant un module d'importation de modèle pour importer la représentation informatique, p. ex. sous la forme d'un fichier électronique, de la structure en haute mer qui décrit les dimensions et une configuration mécanique de la structure, et un module de reconnaissance de structure pour positionner les marqueurs virtuels sur la structure en haute mer correspondant à des éléments de structure ou des parties de celle-ci à l'aide de la représentation informatique.

20. Produit programme informatique selon la revendication 19, comprenant :
- un module logiciel d'acquisition d'images pour acquérir des données d'image horodatées représentant les positions relatives des marqueurs virtuels dans un cadre de référence mobile ;
- un module logiciel de position pour acquérir des données de position de dispositif d'imagerie horodatées synchronisées avec lesdites données d'image ;
- un module d'identification de marqueur pour identifier des marqueurs virtuels individuels à l'intérieur des données d'image ;
- un module de suivi de marqueurs pour suivre activement les marqueurs virtuels identifiés ;
- un module de reconstruction d'image pour transformer les données d'image du cadre de référence mobile dans le cadre de référence fixe,
- un module de traitement pour traiter les données d'image et les données de position de dispositif d'imagerie pour calculer la position de la structure en haute mer dans le cadre de référence fixe suivant six degrés de liberté au moyen des positions de la pluralité de marqueurs virtuels sur la structure en haute mer, ainsi que les positions de marqueur des marqueurs virtuels telles que dérivées des données d'image et des données de position de dispositif d'imagerie, et
- un module GUI qui présente un affichage de la structure dans le cadre de référence fixe.
